# EUROPEAN PATENT SPECIFICATION

(11) **EP 2 996 523 B1**
(45) Date of publication and mention of the grant of the patent: **14.06.2017**
(21) Application number: 14729980.4
(22) Date of filing: 16.05.2014
(51) Int. Cl.: A47J 31/40, A47J 31/42, A47J 31/44

(54) **COFFEE BREWING APPARATUS, COFFEE BEVERAGE SYSTEM AND METHOD FOR PREPARING A COFFEE BEVERAGE**
KAFFEEBRAUVORRICHTUNG, KAFFEEGETRÄNKSYSTEM UND VERFAHREN ZUR ZUBEREITUNG EINES KAFFEEGETRÄNKS
APPAREIL D'INFUSION DE CAFÉ, SYSTÈME D'INFUSION DE BOISSON DE CAFÉ ET PROCÉDÉ POUR PRÉPARER UNE BOISSON DE CAFÉ

(30) Priority: 17.05.2013 NL 2010820
(43) Date of publication of application: 23.03.2016
(73) Proprietor: Koninklijke Douwe Egberts B.V., 3532 AD Utrecht (NL)
(72) Inventor: DE GRAAFF, Gerbrand Kristiaan, 3532 AD Utrecht (NL)
(74) Representative: V.O.
(86) International application number: PCT/NL2014/050311
(87) International publication number: WO 2014/185783

(56) References cited:
- EP-A1- 2 253 253
- GB-A- 2 485 073

## Description

The invention relates to a coffee brewing apparatus, comprising an entrance opening for receiving coffee beans, a grinder for grinding coffee beans which have entered the coffee apparatus via the entrance opening, comprising a ground coffee transportation path for transporting ground coffee from the grinder to a brewing device, a brewing device for brewing coffee on the basis of the delivered ground coffee, and an air ventilation system.

Such an apparatus is for example known from EP-A-2,253,253.

The invention further relates to a coffee beverage system, including a coffee bean packaging cartridge and a coffee brewing apparatus as mentioned before, wherein the coffee bean packaging cartridge is removably connected to the coffee brewing apparatus and being arranged for holding and supplying multiple servings of coffee beans.

Finally, the invention relates to a method for preparing a beverage by means of an apparatus as mentioned before.

Hereby patent specification NL2006232 with the title "Coffee beverage system, coffee brewing apparatus, coffee bean packaging cartridge and method for preparing a coffee beverage" is incorporated by reference to its entirety.

The above coffee brewing apparatus and coffee beverage systems are widely known in the art. They provide the consumer mostly full automatically with a hot beverage and especially a coffee beverage. A major distinction between the coffee brewing apparatus of the above-mentioned kind and other coffee brewing apparatuses, for example capsule based coffee apparatuses or ground coffee based coffee apparatuses, is the included grinder, providing freshly and on demand ground coffee when a coffee beverage is requested by a user.

Beverage machines and systems based on "on demand grinding" provide a high quality ground coffee starting material for producing the beverage, being somehow advantageous in comparison to machines where coffee beverage starting material is provided and used in an already ground form, or instead of capsule based coffee machines.

However, having in mind the need of a reliable and cost effective coffee brewing apparatus and system respectively, the subjective impression of the user regarding the quality of the machine and the produced product respectively is often influenced by the mechanical overall impression of the machine.

It is therefore a need to provide a coffee brewing apparatus and a coffee beverage system providing an improved impression of high quality coffee beverages produced.

This object is solved by the subject-matter of the independent claims.

Especially, this object is solved by a coffee brewing apparatus, comprising an entrance opening for receiving coffee beans, a grinder for grinding coffee beans which have entered the coffee brewing apparatus via the entrance opening, a ground coffee transportation path for transporting ground coffee from the grinder to a brewing device, a brewing device for brewing coffee on the basis of the delivered ground coffee, and an air ventilation system, characterized in that the air ventilation system is in fluid connection with the grinder for providing at least one air stream comprising at least a coffee grinding aroma to the outside of the coffee brewing apparatus, and in that the air ventilation system comprises at least one fan and at least one air stream guiding element, which is at least partially providing a flow path for the air stream from the grinder to the fan. Preferably the air ventilation system is built in such a way that the at least one air stream comprising the coffee grinding aroma is directed in the direction of a user of the apparatus. To the above regard it can be advantageous when the flow path for the air stream optionally is provided from one or more of the other of the above portions and parts to the fan and/or from the fan to the outside of the apparatus. A combination of fan and one or more air stream guiding elements and interconnection elements provides a fluid connection and preferably an air ventilation path for directing the air stream loaded with the aroma from the grinder and optionally from at least one of the above mentioned parts to the outside of the apparatus. Here, all kinds of air stream guiding elements for example tubes, chutes or similar volume elements can be used.

The above object is also solved by a coffee beverage system including a coffee bean packaging cartridge and the coffee brewing apparatus mentioned above, wherein the coffee bean packaging cartridge is removable connected to the coffee brewing apparatus and being arranged for holding and supplying multiple servings of coffee beans.

Finally, the above object is solved by a method for preparing a beverage by means of an apparatus as mentioned before, wherein the method comprises the following steps: transporting coffee beans to the grinder and grinding them to ground coffee; transporting the ground coffee to the brewing chamber via the ground coffee outlet on a ground coffee transportation path; providing an air stream at least partially during grinding and/or transportation of the ground coffee, whereby the airstream passes at least partially the ground coffee transportation path, to the outside of the coffee brewing apparatus and preferably in the direction of a user of the apparatus.

Unless stated otherwise, in the description and claims coffee beans are understood to be roasted coffee beans. Coffee beans in the description and claims may be understood to cover also fragmented coffee beans, i.e. coffee bean fragments, which coffee bean fragments are still to be ground for extracting desired coffee beverage. The coffee beans are for instance broken before they are packed. Of course, also a mixture of coffee bean fragments and whole coffee beans could be used.

With regard to the grinder all known grinders can be used with an apparatus, system and method according to the invention, independently of the arrangement of their individual parts, design and utilized grinding methods, like burr-grinding, chopping, pounding, and roller grinding, respectively. This also applies for the respective brewing apparatus and their respective arrangement and design.

It is one key aspect of the invention that an air ventilation system is used providing at least one air stream coming into contact with the freshly ground coffee beans, directed after this contact to the outside of the coffee brewing apparatus and system respectively and preferably in the direction of a user. By this air ventilation system aroma agents enclosed in the coffee beans and released during grinding are transported to the outside so that the coffee grinding aroma is distributed in the outside area. This of course increases the impression of fresh coffee used for brewing the beverages and increases the impression of quality for the user.

In detail, the air ventilation system preferably transports an air stream loaded with coffee grinding aroma released during grinding in the grinder to the outside and preferably in the direction of a user of the apparatus actively.

It is possible to provide the ventilation system also in such a way that it is arranged for providing the at least one air stream to the outside of the coffee brewing apparatus and preferably in the direction of a user of the apparatus, which is also comprising a brewing aroma and/or an aroma of the non ground coffee beans which have entered or are arranged for entering the coffee brewing apparatus. In detail it can be advantageous to provide an airstream comprising a combination of the coffee grinding aroma and the brewing aroma and/or the aroma of non ground beans as especially this combination has a very high influence on the impression a user of the machine will have of fresh coffee being used with an in particular high quality. The aroma of the non ground beans could e.g. be an aroma received from the inner volume of a coffee bean packaging cartridge comprising the beans and serving to deliver them to the entrance opening. It also could be an aroma received from the beans during entering the grinder on a beans transportation path between the entrance opening and the grinder.

Advantageously the apparatus and the coffee beverage system according to the invention comprise at least one beans transportation path, which could e.g. be a tube, a chute, a funnel etc., for transporting the beans from the entrance opening to the grinder.

"Brewing aroma" as mentioned above could be the aroma received from the brewing apparatus during brewing. It is also possible that the "brewing aroma" is aroma of the ground coffee which entered the brewing apparatus and preferably before the brewing process has started or has been performed or before a brewing chamber where the ground coffee has been entered is sealed for the brewing process. Preferably the aroma of ground coffee entering and/or residing in the preferably warm and moistures brewing chamber of the brewing apparatus before the brewing process has started is used as the above "brewing aroma" as it provides a very intense coffee aroma to be preferably mixed with the aroma of the grinding process. For redundancy reason with regard to the features relevant for providing an air stream comprising the brewing aroma and/or the aroma of non ground beans, it is herewith referred to the features mentioned herein relating to providing an airstream comprising the coffee grinding aroma.

It could be advantageous if the air ventilation system is arranged for transporting air originating from the grinder (or preferably from the grinder and from the brewing chamber and/or from non ground beans as mentioned in the passage before) to the outside of the apparatus. It could also be advantageous if the air ventilation system is arranged for sucking out air originating from the grinder or preferably from the grinder and from the brewing chamber and/or from non ground beans, for transportation of the air to the outside of the apparatus, as will be explained in more detail further below. It could also be advantageous if the air ventilation system is arranged for also transporting air originating from the beverage outlet (which is e.g. arranged after the brewing chamber for dispensing the prepared beverage e.g. to a cup provided by a user), and preferably air comprising the aroma of the prepared beverage to the outside of the apparatus. Also it could be advantageous if the air ventilation system is arranged for transporting air from the inside of the apparatus to its outside and especially air comprising moisture resulting e.g. from the used ground coffee after preparation of the beverage and/or a bin or similar compartment for receiving the used ground coffee after preparation of the beverage and/or from the brewing chamber and/or the preparation process itself. Ventilation of the coffee brewing apparatus according to the above inter alia prevents the grinder from clogging and especially electronic parts from corrosion and malfunctions. It could also be advantageous if the air ventilation system is arranged for transporting steam e.g. resulting during the preparation process of the beverage to the outside of the apparatus and especially in such a way that the steam is visible for the user.

For control of the above "transportation steps" the coffee brewing apparatus is preferably provided with at least one control arrangement so that the air ventilation system is activated during and/or before and/or after the time passages where the respective aromas, air streams, steam streams etc. are accruing. The same applies if e.g. two or more beverages have to be prepared.

Preferably at least one interconnection element like a valve, a fluid crossing element etc. is provided for mixing and/or guiding the above airstreams at least partly simultaneously or in a serial and transport them to the outside of the apparatus in the direction of a user.

With regard to the specific embodiments of the air ventilation system standing in fluid connection with the grinder for providing at least one air stream comprising a coffee grinding aroma to the outside of the coffee brewing apparatus and preferably in the direction of a user of the apparatus it is remarked, that all of these features could also be used in combination with an air ventilation system at least optionally or additionally transporting at least one air stream comprising at least one of the aromas from the group comprising brewing aroma, steam resulting during the beverage preparation, aroma of the non ground coffee or the aroma of the prepared beverage as mentioned further above.

Further advantageous is the fan provided as a suction type fan, for sucking air outside the grinder for providing the at least one air stream comprising the coffee grinding aroma. This means that the air stream is sucked out of the apparatus and preferably out of the grinder and/or connected parts and areas, resulting in a reduced pollution of the interior of the apparatus by air stream pressure and transported fine particles.

It can be advantageous if the before-mentioned fan is positioned at an aroma air stream outlet opening at a housing of the apparatus. Especially, it is possible to position the fan in a fan housing preferably attached to the housing of the apparatus so that the fan can directly evaporate the air stream preferably sucked from the grinder by the one or more air stream guiding elements to the outside of the apparatus.

The housing could for example be provided with a respective air stream permeable cover, e.g. a grate or similar protection elements, to protect the fan from mechanical outside influences. Also it is of course possible to provide a filter or a similar element to ensure protection against suctioned fine particles, especially in the air stream direction before and/or after the fan. Also it may be advantageous to provide an air stream permeable protection element hiding the fan and its respective mechanical elements to the outside of the apparatus. Here, for example a nylon mesh or any other similar hiding element could be used to visually mask the fan from the outside. Also turbulence elements could be used to scatter the airstream while leaving the housing.

It is advantageous to seal the fan against the top cover using for example an open cell neoprene foam gasket. This ensures optimum suction performance. It is further advantageous to provide the fan within a fan housing or fan box securely attached to the inner side of the housing of the coffee brewing apparatus and preferably in the area of the aroma air stream outlet opening at the housing. Here, respective sealing elements can be used as they are known from the state of the art.

It can be advantageous when the grinder comprising an air stream connection element, the at least one air stream guiding element, directly or indirectly connected to the fan, is connected to. It can be further advantageous when the grinder comprises a ground coffee outlet, part of the ground coffee transportation path, for transportation of the ground coffee to the brewing device, the air stream connection element is positioned thereon. Of course, such an air stream connection element can also be provided in the grinder especially right before the ground coffee outlet to guide an air stream from the grinder to the outside of the apparatus. In principle, it can be advantageous to provide a fluid connection between the grinder and especially the ground coffee outlet of the grinder and the fan and the before-mentioned aroma air stream outlet opening at the housing of the apparatus respectively, so that an air stream loaded with aroma of the ground coffee especially during grinding could be directed to the outside of the apparatus. When the air stream is passing the grinder and especially its ground coffee outlet, the air stream is loaded with the coffee grinding aroma released during grinding, so that these aromas are transported to the outside of the apparatus.

An air stream connection element could be every connection element to secure the at least one air stream guiding element to, wherein the air stream guiding element is directly or indirectly connected to the fan. It is possible to provide one or more of such air stream connection elements. It is for example possible to provide an air ventilation system providing different kinds of air streams to different positions at the outside of the machine. This could be achieved by one or more different air stream connection elements or air stream guiding elements directed to different aroma air stream outlet openings at the housing of the apparatus.

In principle, it can be advantageous if the air stream ventilation system is built in such a way that it passes the airstream also through a brewing chamber connection element, constituting a fluid connection between the air stream flow path and the brewing chamber. By this embodiment the air stream comprising the coffee grinding aroma is also loaded with brewing aroma and delivering a mixture of grinding aroma and brewing aroma to the outside. A similar connection element can also be provided with a coffee beans cartridge or with a (non ground) coffee beans transportation path.

Preferably the brewing chamber connection element is a primarily and at least partly upwardly directed air stream guiding element guiding an air stream loaded with the brewing aroma to the airstream loaded with the coffee grinding aroma, to mix these two airstreams. Mixing can be done within the machine and system respectively or at the outside. Preferably the air stream guiding element for guiding an air stream loaded with the brewing aroma is built in such a way that the air stream loaded with the brewing aroma streams essentially upwards interfering with the airstream loaded with the coffee grinding aroma at least partly because of the temperature differences between this brewing aroma loaded airstream and its surrounding.

It can be advantageous if the ground coffee outlet is positioned at least partially at the side part of the grinder. "Side part" means a part lateral of a virtual axis coffee beans are passing the grinder along during grinding. This especially serves to provide a compact coffee beverage apparatus. Furthermore, it guarantees a secure air stream loading with aromas without aspiration of the fine particles and especially the ground coffee transported from the grinder over the ground coffee transportation path.

It can be advantageous if the ground coffee outlet is provided in such a way that the ground coffee is entering the ground coffee outlet by a sideward oriented, preferably horizontal transportation path followed by a downward oriented transportation path. This is inter alia hindering aspiration of the fine ground coffee particles.

It can be advantageous when the ground coffee outlet comprises a ground coffee chute and preferably a funnel, pointing downward into the brewing device.

Having the above in mind, it can be advantageous when the air stream connection element is provided at a position essentially on an equal or preferably on a higher level than the ground level of the ground coffee transportation path. This guarantees that only the (volatile) aromas and especially the (volatile) coffee aromas released during grinding are aspirated by the produced airstream and especially the partial vacuum produced by the fan, wherein the ground coffee leaves the grinder and the ground coffee outlet over the especially downward pointing ground coffee outlet into the brewing device. This tremendously reduces the aspiration of fine particles.

It can be advantageous when the air stream connection element is provided at a top cover element of the ground coffee transportation path and preferably at a top cover of the ground coffee chute. This especially strengthens the before-mentioned effects.

It can be advantageous if at least one filter element is provided within the fluid connection between the grinder and the fan, and preferably at the air stream connection element and preferably at the top cover element of the ground coffee transportation path. This filter element hinders aspiration of ground coffee particles, which probably could block the fan or can be ejected to the outside of the apparatus.

It can be advantageous if at least one control element is provided for controlling a ventilation time of the fan, preferably built in such a way that the ventilation time is controlled dependently on the grinding time of the grinder, and, especially controlled in such a way that it comprises a defined overrun after the grinder has stopped. Thus, it is for example possible to control ventilation time in such a way that only "grinding aromas" are released. In this regard it is also possible to provide a control element and especially a switch to activate and deactivate the air ventilation system for example according to the desire of a user.

As mentioned before, the invention also relates to a coffee beverage system, including a coffee bean packaging cartridge and a coffee brewing apparatus according to the before-mentioned kind, wherein the coffee bean packaging cartridge is removably connected to the coffee brewing apparatus and being arranged for holding and supplying multiple servings of coffee beans.

It can be advantageous if the coffee beans packaging cartridge is including a container comprising an interior volume and at least one exit opening defining a coffee bean outlet, the interior volume holding coffee beans; transportation means adapted for enabling transportation of the coffee beans from the interior volume towards the exit opening of the cartridge and to the entrance opening, wherein the system is further provided with a metering chamber for receiving coffee beans which are transported with the aid of the transportation means into the metering chamber wherein the metering chamber comprises a bottom portion which forms a part of the grinder, said bottom portion being arranged in the coffee brewing apparatus for rotating around a first axis extending in a vertical direction, wherein the system is arranged such that upon activation of the grinder the bottom portion is rotating around the vertical axis for transporting the coffee beans from the metering chamber into the grinder and for grinding the coffee beans.

The invention also relates to a method for preparing a beverage by means of an apparatus as mentioned before, wherein the method comprises the following steps: transporting coffee beans to the grinder and grinding them to ground coffee; transporting the ground coffee to the brewing chamber via the ground coffee outlet on a ground coffee transportation path; providing an air stream at least partially during grinding and/or transportation of the ground coffee, whereby the airstream passes at least partially the ground coffee transportation path, to the outside of the coffee brewing apparatus and preferably in the direction of a user of the apparatus.

For redundancy reasons, the respective features of these methods are not mentioned in the following in detail. However, reference is made to the before-mentioned system and apparatus, wherein all features mentioned as to be relevant or advantageous with regard to the coffee beverage system and the coffee brewing apparatus respectively are transferable to the before-mentioned method and vice versa.

Further embodiments of the invention are disclosed by the sub claims.

The afore-mentioned and other features advantageous of the invention will be more fully understood from the following detailed description of certain embodiments of the invention, taken together with the accompanying drawings, which are meant to illustrate and not limit the invention.

The invention will therefore now be described with reference to the accompanying drawings, in which:
- fig. 1: shows a perspective view of an embodiment of the coffee brewing system according to the present invention with a coffee bean packing cartridge mounted to a coffee brewing apparatus;
- figs. 2 and 3: show a perspective detail view of an embodiment of an air ventilation system of the coffee brewing apparatus according to fig. 1;
- fig. 4: shows a perspective view of a grinder of the apparatus of fig. 1;
- fig. 5: shows a partial cross-sectional view of the grinder of fig. 4;
- fig. 6: shows a bottom view of an embodiment of an air stream connection element of the air ventilation system of figs. 2 and 3; and
- figs. 7 and 8: show another embodiment of an air stream connection element of the air ventilation system of figs. 2 and 3.

In the following, same elements are depicted by same reference signs, wherein indices may be used for discrimination.

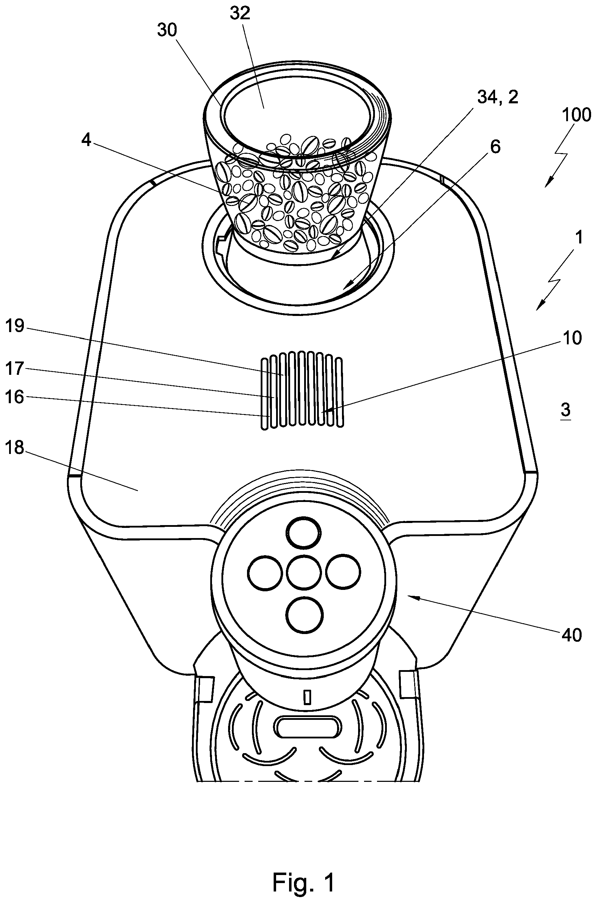

In fig. 1 a coffee beverage system 100 is shown. The system 100 includes a coffee bean packaging cartridge 30 and a coffee brewing apparatus 1. The coffee bean cartridge 30 is removably connected to the coffee brewing apparatus 1 and is arranged for holding and supplying multiple servings of coffee beans 4. The coffee bean packaging cartridge 30 includes a container 32 comprising an interior volume and at least one exit opening 34 defining a coffee bean outlet, wherein the interior volume is holding the coffee beans 4. Transportation means, which are not shown in detail here, are adapted for enabling the transportation of the coffee beans 4 from this interior volume towards the exit opening 34 of the cartridge 30 and to an entrance opening 2 of the coffee brewing apparatus 1. A similar coffee beverage system and apparatus for coffee brewing respectively is already disclosed by NL2006232 as mentioned before and incorporated by reference to its entirety.

As can be seen in fig. 1, the coffee bean packaging cartridge 30 is attached to the coffee brewing apparatus 1 in such a way that the coffee beans 4 can be transported through the exit opening 34 of the cartridge 30 to the entrance opening 2 and therefrom to a grinder 6.

The grinder 6 of the coffee brewing apparatus 1 serves for grinding the coffee beans 4 which have entered the coffee apparatus 1 via the entrance opening 2. With regard to the grinder, especially a grinder is used as described in the above patent application NL2006232. As will be explained in the following, the grinder 6 comprises a coffee transportation path 8 for transporting ground coffee from the grinder to a brewing device 40, wherein the brewing device serves for brewing a coffee beverage on the basis of the delivered ground coffee.

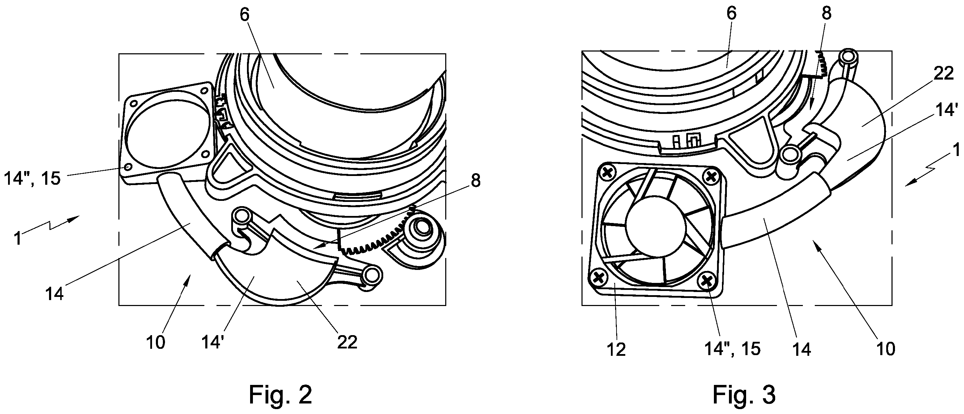

Further and as disclosed with fig. 1, the coffee brewing apparatus 1 also comprises an air ventilation system 10 in fluid connection with the grinder 6 for providing at least one air stream comprising a coffee grinding aroma to the outside 3 of the coffee brewing apparatus 1 and preferably in the direction of a user of the apparatus. Therefore, the air ventilation system 10 comprises a fan 12 (see for example fig. 3), especially sucking air from the grinder to the outside 3 of the coffee brewing apparatus 1, wherein according to this embodiment for releasing the air stream comprising the grinding aroma an aroma air stream opening 16 is provided at the housing 18 of the coffee brewing apparatus 1. By this aroma air stream opening 16 the air stream comprising a coffee grinding aroma sucked from the grinder 6 could be released to the outside of the coffee brewing apparatus 1 and, according to the position of the aroma air stream opening 16 chosen with this embodiment as shown with fig. 1, into the direction of a user of the apparatus 1.

By directing such an air stream comprising a coffee grinding aroma, the user gets the impression of fresh coffee being used with an in particular high quality.

The fan 12 (see for example fig. 3) is directly attached to the housing 18 of the coffee brewing apparatus 1 behind a grating 17 incorporated in the housing 18 and extending over the aroma air stream opening 16. Beneath this grating 17 an air permeable nylon mesh 19 or similar mesh is arranged hiding direct view on the fan 12. It should be mentioned that the aroma air stream opening 16 and the respective elements attached to it could be arranged in any position of the coffee brewing apparatus advantageous for directing an air stream comprising a coffee grinding aroma to the outside and especially to a user. Of course, also multiple aroma air stream openings could be provided.

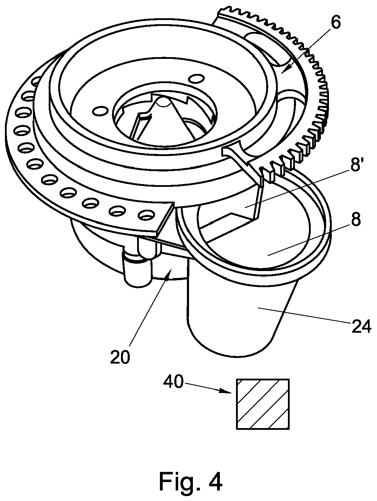

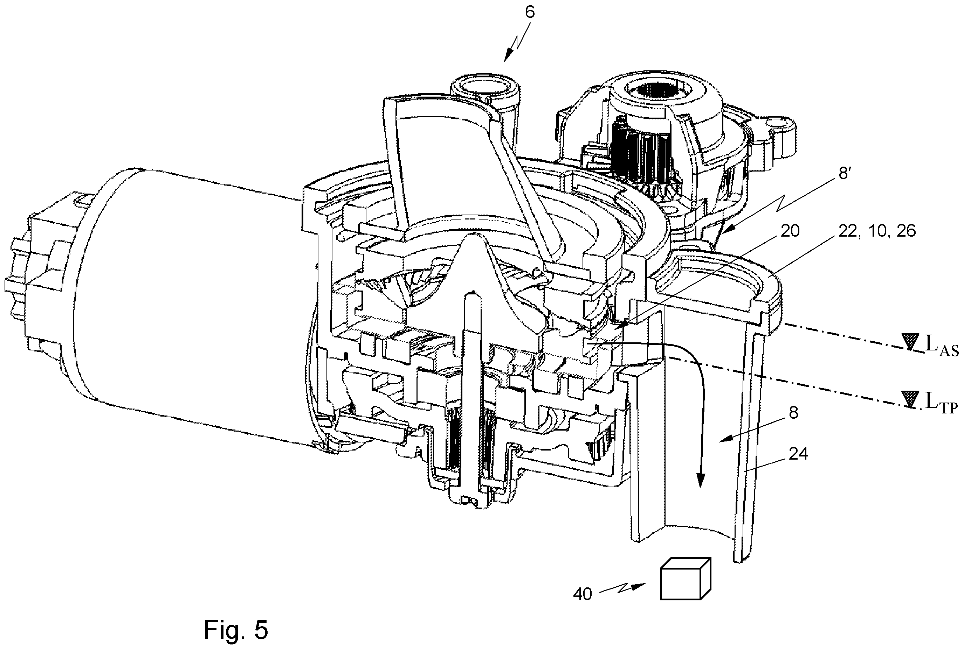

Figs. 2 and 3 show a detailed perspective view of the air ventilation system 10 used for providing the air stream to the outside of the coffee brewing apparatus 1. As can be seen especially with fig. 3, the air ventilation system 10 comprises the fan 12 attached to an air stream connection element 22 arranged at the grinder 6 and especially close to a ground coffee transportation path 8 (see figs. 4 and 5). The air stream connection element 22 also comprises an air stream guiding element 14' connected to the fan 12 via another air stream guiding element 14 and in detail via a tube 14. By rotating the fan 12, low pressure is produced within the air stream guiding elements 14, 14' so that air is sucked out from the grinder 6 especially aspirating coffee grinding aroma released while grinding the coffee beans 4 (see fig. 1).

With a special embodiment it possible to provide the ventilation system also in such a way that the airstream also comprises an aroma of the non ground coffee beans which have entered or are arranged for entering the coffee brewing apparatus. As can be seen with Fig. 1 and 3, the fan 12 stands in direct fluid connection with the grinder 6, which itself stands in direct fluid connection with the exit opening 34 of the cartridge 30 for storing the coffee beans (see Fig. 1). By providing a fluid connection from this cartridge 30 to the fan 12, e.g. by providing an openable and closeable shutter or similar valve means, it is possible to mix the aroma of the non ground coffee beans to the air stream as well. In this regard it is useful if the fluid connection is established at least when the fan 12 is operating.

In detail with the above special embodiment it can be advantageous to provide an airstream comprising a combination of the grinding aroma and the aroma of non ground beans as especially this combination has a very high influence on the impression a user of the machine will have of fresh coffee being used with an in particular high quality. The aroma of the non ground beans could e.g. be an aroma received from the inner volume of the cartridge 30 comprising the beans and serving to deliver them to the entrance opening 2. With this embodiment it is further possible to receive the aroma of the non ground coffee from the beans during entering the grinder 6 on a beans transportation path with the aid of the transportation means between the entrance opening 2 and the grinder 6. Also here respective openable and closeable shutter or similar valve means could be used.

For providing a more effective fluid connection between the storage chamber 30 or the beans transportation path between the chamber 30 and the grinder 6 for providing the aroma of the non ground beans to the air stream additional connection elements could be used standing in fluid connection with the chamber and the beans transportation path respectively.

The fan 12 is arranged within a fan housing 15 which is also provided as an air stream guiding element 14". The arrangements of fan housing 15 and fan 12 are sealantly attached to the underside of the housings 18 of the coffee brewing apparatus 1 (see fig. 1).

Figs. 4 and 5 show perspective views of the grinder 6 shown in figs. 2 and 3 and in detail disclosing the ground coffee transportation path 8 serving for transportation of the ground coffee beans 4 from the grinder 6 to the brewing apparatus 40, which is not shown here in detail but mentioned for completeness reasons. Reference sign 40 simply depicts on the position where the brewing device is normally provided.

The grinder 6 comprises a ground coffee outlet 20 part of the ground coffee transportation path 8, for transportation of the ground coffee ground from the grinder to the brewing device 40.

With this embodiment the ground coffee outlet 20 is provided in such a way that the ground coffee is entering the ground coffee outlet 20 by a sideward oriented, especially horizontal transportation path 8' followed by a downward oriented transportation path 8. In detail the ground coffee outlet comprises a ground coffee chute 24 which is provided as a funnel, and which is pointing downwards into the brewing device 40. After entering the coffee beans into the grinder 6 and grinding them to ground coffee, the ground coffee is transported by transportation means (not shown) along this transportation path 8 to the brewing device where the coffee beverage is brewed as it is known from the state of the art. Here all known brewing devices making use of ground coffee can be used.

As can be seen with fig 5, the ground coffee outlet 20 is positioned at least partially at the side part of the grinder 6 whereby the air stream connection element 22 as it was shown before in figs. 2 and 3 is positioned at the top part of the transportation path 8 and especially at a position essentially on an equal or on a higher level L_{AS} than the level L_{TP} of the ground coffee transportation path 8.

In general (see figs. 2,3,5), arranging the air stream connection element 22 connected by at least one air stream guiding element 14 directly or indirectly to the fan 12 of the air ventilation system 10 on a level equal and preferably higher than the level of the ground coffee transportation path 8, results in tremendously reducing fine particles of the ground coffee transported on the ground coffee transportation path 8 into the air ventilation system 10, thereby enhancing the lifetime of the air ventilation system in total. Preferably, the air ventilation system 10 is attached to the ground coffee transportation path 8 of the ground coffee outlet 20 of the grinder 6 at the highest position along said path.

As can be seen with fig. 5, the air stream connection element 22 is provided at a top cover element 26 of the ground coffee transportation path 8 and especially at a top cover 26 of the ground coffee chute 24. In detail the air stream connection element 22 and the respective top cover element 26 are positioned above that part of the transportation path 8 which is downwardly or at least inclined with regard to a horizontal plane and especially more than 45 degrees.

It can be advantageous if the air stream ventilation system 10 is built in such a way that it passes the airstream also through a brewing chamber connection element, constituting a fluid connection between the air stream flow path and the brewing chamber. This brewing chamber connection element is e.g. at least partially constituted by the ground coffee transportation path 8. So the air stream comprising the coffee grinding aroma is also loaded with brewing aroma. Like mentioned above, a similar connection element can also be provided with the coffee beans cartridge or with the (non ground) coffee beans transportation path.

Preferably the brewing chamber connection element, here the ground coffee transportation path 8, is a primarily and at least partly upwardly directed air stream guiding element (especially e.g. the chute 24) guiding an air stream loaded with the brewing aroma to the airstream loaded with the coffee grinding aroma, to mix these two airstreams. Mixing can e.g. here be done within the machine and system respectively, wherein the air stream guiding element 14 for guiding an air stream loaded with the brewing is built in such a way that the air stream loaded with the brewing aroma streams essentially upwards interfering with the airstream loaded with the grinding aroma at least partly because of the temperature differences between this brewing aroma loaded airstream and its surrounding.

It could also be advantageous if the air ventilation system 10 is arranged for also transporting air originating from the beverage outlet (which is e.g. arranged after the brewing chamber for dispensing the prepared beverage e.g. to a cup provided by a user - not disclosed but obvious for a skilled person), and preferably air comprising the aroma of the prepared beverage. In detail a respective airstream could e.g. be mixed with at least one of the air streams mentioned above. Also it could be advantageous if the air ventilation system 10 is arranged for transporting air from the inside of the coffee brewing apparatus 1 and the coffee beverage system 100 to the outside 3 and especially air comprising moisture resulting e.g. from the used ground coffee after preparation of the beverage and/or a bin or similar compartment for receiving the used ground coffee after preparation of the beverage and/or from the brewing chamber 40. Ventilation of the coffee brewing apparatus 1 and the coffee beverage system 100 respectively according to the above inter alia prevents the grinder from clogging. It could also be advantageous if the air ventilation system 10 is arranged for transporting steam e.g. produced during the preparation process of the beverage and especially within the brewing chamber 40 to the outside of the machine and especially in such a way that the steam is visible for the user. The before mentioned air streams are preferably also guided to the outside 3 via the air stream guiding and connection elements 14, 22 and the aroma air stream opening 16. Preferably additional air stream guiding elements are provided for extracting and especially sucking air from the inside of the systems 1 and 100 respectively standing in fluid connection with the aroma airstream opening 16 or similar portions for guiding the before mentioned air streams to the outside 3.

With the disclosed embodiments the air stream guiding and connection elements 14, 22 and also the chute 24 can be used with interconnection elements also comprising valves, fluid crossing element etc. for mixing and/or guiding multiple airstreams at least partly simultaneously or in a serial to the outside of the apparatus in the direction of a user, the air streams comprising apart from coffee grinding aroma at least one of the following, namely brewing aroma, steam resulting during the beverage preparation, aroma of the non ground coffee or the aroma of the prepared beverage as mentioned further above.

It is remarked, that all of the features described in combination with the specific embodiments of the air ventilation system 10 standing in fluid connection with the grinder 6 for providing at least one air stream comprising a coffee grinding aroma to the outside 3 of the coffee brewing apparatus 1 and preferably in the direction of a user of the apparatus, could also be used in combination with the air ventilation system 10 at least additionally arranged for transporting at least one (additional or mixed) air stream comprising at least one of the aromas from the group comprising brewing aroma, steam resulting during the beverage preparation, aroma of the non ground coffee or the aroma of the prepared beverage as mentioned further above.

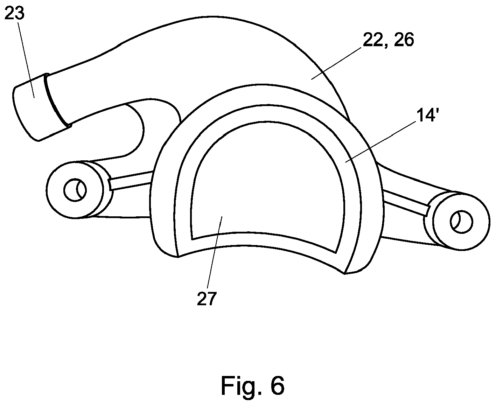

Fig. 6 shows an underview of the air stream connection element 22 and the top cover element 26 of the ground coffee transportation path 8, respectively. As can be seen, the air stream connection element 22 comprises a hollow protrusion element 23 the air stream guiding element 14 and especially the used tube 14 can be attached to (see figs. 2 and 3). The air stream connection element 22 comprises an inner chamber 27 the air can circulate in before entering the hollow protrusion element 23 and then being guided to the fan.

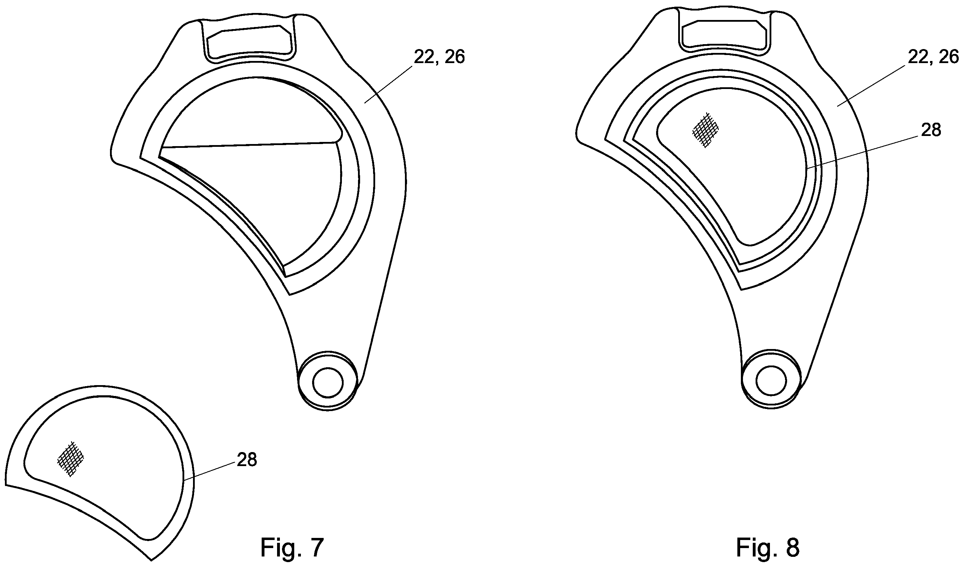

Figs. 7 and 8 show another embodiment of the air stream connection element 22 and the top cover element 26 respectively where a filter element 28 is attached to hinder fine particles and especially ground coffee elements being aspirated by the air ventilation system 10 (see figs. 2 and 3). The filter element 28 can, e.g., be a non-woven polyester pad bonded to an acrylic frame with silicon adhesive. The filter element 28 pressfits inside the top cover 26 and the air stream connection element 22 respectively and preferably to a respective filter seat.

During preparing a coffee beverage with the apparatus 1 (see figs. 1, 2, 3, 4 and 5) the fan 12 switches on when the grinder 6 starts and overruns for a specific time period, for example for 20 to 40 and especially 30 seconds after the grinder 6 has stopped grinding. This means it stops for example about 5 to 10 seconds before the end of the preparation of a single served drink. To disable the fan operation, a switch could be provided enabling turning on and off the fan operation and the air stream operation respectively. According to the arrangement explained above also when the fan is not running, there could still be a clear flow path provided to the aroma air stream opening 16 so that a coffee grinding aroma air stream is provided to the outside of the apparatus 1.

In the foregoing specification, the invention has been described with reference to specific embodiments of the invention. It will, however, be evident that various modifications and changes may be made therein without departing from the broader spirit and scope of the invention as set forth in the appended claims.

However, other modifications, variations and alternatives are also possible. The specifications, drawings and examples are, accordingly, to be regarded in an illustrative rather than in a restrictive sense. In the claims any reference signs placed between parentheses shall not be construed as limiting the claims. The word "comprising" does not exclude the presence of other features or steps than those listed in a claim. Furthermore, the words "a" and "an" shall not be construed as limiting to "only one" but instead are used to mean "at least one", and do not exclude a plurality. The mere fact that certain measures are restricted in a mutually different claim does not indicate that a combination of the measures cannot be used to advantage.

### Reference signs

- 1: Coffee brewing apparatus
- 2: Entrance opening
- 3: Outside
- 4: Coffee beans
- 6: Grinder
- 8: Ground coffee transportation path
- 10: Air ventilation system
- 12: Fan
- 14: Air stream guiding element
- 15: Fan housing
- 16: Aroma air stream opening
- 17: Grating
- 18: Housing
- 19: Permeable mesh
- 20: Ground coffee outlet
- 22: Air stream connection element
- 23: Protrusion
- 24: Ground coffee chute
- 26: Top cover element
- 27: Hollow chamber
- 28: Filter element
- 30: Coffee bean packaging cartridge
- 32: Container
- 34: Coffee bean outlet and exit opening respectively
- 40: brewing device
- 100: Coffee beverage system
- L_{AS}: Level
- L_{TP}: Level

## Claims

1. Coffee brewing apparatus, comprising
an entrance opening (2) for receiving coffee beans (4),
a grinder (6) for grinding coffee beans which have entered the coffee brewing apparatus (1) via the entrance opening (2),
a ground coffee transportation path (8) for transporting ground coffee from the grinder (6) to a brewing device,
a brewing device (40) for brewing coffee on the basis of the delivered ground coffee, and
an air ventilation system (10),
**characterized in that** the air ventilation system (10) is in fluid connection with the grinder (6) for providing at least one air stream comprising at least a coffee grinding aroma to the outside (3) of the coffee brewing apparatus (1) and preferably in the direction of a user of the apparatus (1), and **in that** the air ventilation system (10) comprises at least one fan (12) and at least one air stream guiding element (14), which is at least partially providing a flow path for the air stream from the grinder (6) to the fan (12).

2. Apparatus according to claim 1,
wherein the air ventilation system (10) is arranged for transporting air originating from the grinder to the outside of the apparatus.

3. Apparatus according to claim 1 or 2,
wherein the air ventilation system (10) is arranged for sucking out air originating from the grinder for transportation of the air to the outside of the apparatus.

4. Apparatus according to any one of the preceding claims, wherein the airstream or an additional airstream to be mixed or in line with the airstream also comprises a brewing aroma and/or an aroma of non ground coffee beans which have entered or are arranged for entering the coffee brewing apparatus and/or an aroma of the prepared beverage and/or steam resulting during the preparation of a beverage.

5. Apparatus according to any one of the preceding claims,
wherein the air ventilation system (10) further comprises additional air stream guiding elements (14', 14"), which are at least partially providing a flow path for the air stream from the fan to the outside (3) of the apparatus (1) and/or from the brewing chamber (40) and/or from a container (32) for storing non ground coffee beans and/or from the entrance opening (2) for receiving the non ground coffee beans and/or from a beverage outlet for dispensing the prepared beverage to the fan (12).

6. Apparatus according to any one of the preceding claims,
wherein the fan (12) is provided as a suction type fan, for sucking air outside the grinder (6) for providing the at least one airstream comprising the coffee grinding aroma.

7. Apparatus according to any one of the preceding claims,
wherein the fan (12) is positioned at an aroma air stream outlet opening (16) at a housing (18) of the apparatus (1).

8. Apparatus according to any one of the preceding claims,
wherein the grinder (6) comprising an air stream connection element (22), the at least one air stream guiding element (14), directly or indirectly connected to the fan (12), is connected to.

9. Apparatus according to any one of the preceding claims,
wherein the grinder comprises a ground coffee outlet (20), part of the ground coffee transportation path (8), for transportation of the ground coffee to the brewing device and wherein the air stream connection element (22) is positioned thereon.

10. Apparatus according to claim 9,
wherein the ground coffee outlet (20) is positioned at least partially at the side part of the grinder (6).

11. Apparatus according to claim 9 or 10,
wherein the ground coffee outlet (20) is provided in such a way that the ground coffee is entering the ground coffee outlet (20) by a sideward oriented preferably horizontal transportation path (8') followed by a downward oriented transportation path (8).

12. Apparatus according to any one of the claims 9-11
wherein the ground coffee outlet (20) comprises a ground coffee chute (24) and preferably a funnel, pointing downwards into the brewing device.

13. Apparatus according to any one of the claims 8-12,
wherein the air stream connection element (22) is provided at a position essentially on an equal or on a higher level (L_{AS}) than the level (L_{TP}) of the ground coffee transportation path (8).

14. Apparatus according to any one of the claims 8-13,
wherein the air stream connection element (22) is provided at a top cover element (26) of the ground coffee transportation path (8) and preferably at a top cover (26) of a ground coffee chute (24).

15. Apparatus according to any one of the preceding claims,
wherein at least one filter element (28) is provided within the fluid connection between the grinder (6) and the fan (12), and preferably at a top cover element (20) of the ground coffee transportation path (8).

16. Apparatus according to any one of the preceding claims,
comprising at least one control element for controlling a ventilation time of the fan (12), preferably build in such a way that the ventilation time is controlled dependently on the grinding time of the grinder (6) and preferably controlled in such a way that it comprises a defined overrun after the grinder (6) has stopped.

17. Coffee beverage system, including a coffee bean packaging cartridge (30) and a coffee brewing apparatus (1) according to any one of the preceding claims, wherein the coffee bean packaging cartridge (30) is removable connected to the coffee brewing apparatus (1) and being arranged for holding and supplying multiple servings of coffee beans (4).

18. Coffee beverage system according to claim 17,
the coffee beans packaging cartridge (30) including:
a container (32) comprising an interior volume and at least one exit opening (34) defining a coffee bean outlet, the interior volume holding coffee beans (4);
transportation means adapted for enabling transportation of the coffee beans (4) from the interior volume towards the exit opening (34) of the cartridge (30) and to the entrance opening (2),
wherein the system is further provided with a metering chamber for receiving coffee beans which are transported with the aid of the transportation means into the metering chamber wherein the metering chamber comprises a bottom portion which forms a part of the grinder, said bottom portion being arranged in the coffee brewing apparatus for rotating around a first axis extending in a vertical direction wherein the system is arranged such that upon activation of the grinder the bottom portion is rotating around the vertical axis for transporting the coffee beans from the metering chamber into the grinder and for grinding the coffee beans.

19. A method for preparing a beverage by means of an apparatus according to any one of the claims 1-16, wherein the method comprises the following steps: transporting coffee beans to the grinder and grinding them to ground coffee;
transporting the ground coffee to the brewing chamber via the ground coffee outlet on a ground coffee transportation path;
providing an air stream at least partially during grinding and/or transportation of the ground coffee, whereby the airstream passes at least partially the ground coffee transportation path, to the outside of the coffee brewing apparatus and preferably in the direction of a user of the apparatus.

## Patentansprüche

1. Kaffeebrühvorrichtung, umfassend:
eine Eingangsöffnung (2) zum Aufnehmen von Kaffeebohnen (4),
ein Mahlwerk (6) zum Mahlen von Kaffeebohnen, die über die Eingangsöffnung (2) in die Kaffeebrühvorrichtung (1) gekommen sind,
einen Transportweg (8) für gemahlenen Kaffee zum Transportieren von gemahlenem Kaffee von dem Mahlwerk (6) zu einer Brühvorrichtung,
eine Brühvorrichtung (40) zum Brühen von Kaffee auf der Basis des zugeführten gemahlenen Kaffees und
ein Belüftungssystem (10),
**dadurch gekennzeichnet, dass** das Belüftungssystem (10) in Fluidverbindung mit dem Mahlwerk (6) ist, um mindestens einen Luftstrom, der mindestens ein Kaffeemahlaroma umfasst, zur Außenseite (3) der Kaffeebrühvorrichtung (1) und bevorzugt in Richtung eines Benutzers der Vorrichtung (1) bereitzustellen, und dass das Belüftungssystem (10) mindestens einen Lüfter (12) und mindestens ein Luftstromleitelement (14) umfasst, das mindestens teilweise einen Strömungsweg für den Luftstrom von dem Mahlwerk (6) zu dem Lüfter (12) bereitstellt.

2. Vorrichtung nach Anspruch 1,
wobei das Belüftungssystem (10) angeordnet ist, um Luft, die von dem Mahlwerk stammt, zur Außenseite der Vorrichtung zu transportieren.

3. Vorrichtung nach Anspruch 1 oder 2,
wobei das Belüftungssystem (10) angeordnet ist, um Luft, die von dem Mahlwerk stammt, für den Transport der Luft zur Außenseite der Vorrichtung herauszusaugen.

4. Vorrichtung nach einem der vorhergehenden Ansprüche, wobei der Luftstrom oder ein zusätzlicher Luftstrom, der mit dem Luftstrom zu mischen oder in Linie ist, auch ein Brüharoma und/oder ein Aroma von ungemahlenen Kaffeebohnen, die eingetreten sind in oder angeordnet sind zum Eintreten in die Kaffeebrühvorrichtung, und/oder ein Aroma des zubereiteten Getränks und/oder Dampf, der während der Zubereitung des Getränks entsteht, umfasst.

5. Vorrichtung nach einem der vorhergehenden Ansprüche, wobei das Belüftungssystem (10) ferner zusätzliche Luftstromleitelemente (14', 14") umfasst, die mindestens teilweise einen Strömungsweg für den Luftstrom von dem Lüfter zur Außenseite (3) der Vorrichtung (1) und/oder von der Brühkammer (40) und/oder von einem Behälter (32) zum Speichern von ungemahlenen Kaffeebohnen und/oder von der Eingangsöffnung (2) zum Aufnehmen der ungemahlenen Kaffeebohnen und/oder von einem Getränkeauslass zum Ausgeben des zubereiteten Getränks an den Lüfter (12) bereitstellen.

6. Vorrichtung nach einem der vorhergehenden Ansprüche,
wobei der Lüfter (12) als ein Saugtyplüfter bereitgestellt ist, um Luft außerhalb des Mahlwerks (6) anzusaugen, um den mindestens einen Luftstrom, der das Kaffeemahlaroma umfasst, bereitzustellen.

7. Vorrichtung nach einem der vorhergehenden Ansprüche,
wobei der Lüfter (12) an einer Aromaluftstrom-Auslassöffnung (16) an einem Gehäuse (18) der Vorrichtung (1) positioniert ist.

8. Vorrichtung nach einem der vorhergehenden Ansprüche,
wobei das Mahlwerk (6), umfassend ein Luftstromverbindungselement (22), mit dem das mindestens eine Luftstromleitelement (14), direkt oder indirekt verbunden mit dem Lüfter (12), verbunden ist.

9. Vorrichtung nach einem der vorhergehenden Ansprüche,
wobei das Mahlwerk einen Auslass (20) für gemahlenen Kaffee umfasst, der Teil des Transportwegs (8) für gemahlenen Kaffee ist, um den gemahlenen Kaffee zu der Brühvorrichtung zu transportieren, und wobei das Luftstromverbindungselement (22) darauf positioniert ist.

10. Vorrichtung nach Anspruch 9,
wobei der Auslass (20) für gemahlenen Kaffee mindestens teilweise an dem Seitenteil des Mahlwerks (6) positioniert ist.

11. Vorrichtung nach Anspruch 9 oder 10,
wobei der Auslass (20) für gemahlenen Kaffee derart bereitgestellt ist, dass der gemahlene Kaffee in den Auslass (20) für gemahlenen Kaffee durch einen seitwärts ausgerichteten, bevorzugt horizontalen Transportweg (8'), gefolgt von einem abwärts ausgerichteten Transportweg (8), eintritt.

12. Vorrichtung nach einem der Ansprüche 9-11,
wobei der Auslass (20) für gemahlenen Kaffee eine Rutsche (24) für gemahlenen Kaffee und bevorzugt einen Trichter, der abwärts in die Brühvorrichtung weist, umfasst.

13. Vorrichtung nach einem der Ansprüche 8-12,
wobei das Luftstromverbindungselement (22) an einer Position bereitgestellt ist, die im Wesentlichen auf einer gleichen oder einer höheren Ebene (L_{AS}) als die Ebene (L_{TP}) des Transportwegs (8) des gemahlenen Kaffees ist.

14. Vorrichtung nach einem der Ansprüche 8-13,
wobei das Luftstromverbindungselement (22) an einem oberen Abdeckungselement (26) des Transportwegs (8) für gemahlenen Kaffee und bevorzugt an einer oberen Abdeckung (26) einer Rutsche (24) für gemahlenen Kaffee bereitgestellt ist.

15. Vorrichtung nach einem der vorhergehenden Ansprüche,
wobei mindestens ein Filterelement (28) innerhalb der Flüssigkeitsverbindung zwischen dem Mahlwerk (6) und dem Lüfter (12) und bevorzugt an einem oberen Abdeckelement (20) des Transportwegs (8) von gemahlenem Kaffee bereitgestellt ist.

16. Vorrichtung nach einem der vorhergehenden Ansprüche,
umfassend mindestens ein Steuerelement zum Steuern einer Lüftungszeit des Lüfters (12), bevorzugt so gebaut, dass die Lüftungszeit abhängig von der Mahlzeit des Mahlwerks (6) gesteuert wird und bevorzugt so gesteuert wird, dass sie einen definierten Nachlauf nach dem Stoppen des Mahlwerks (6) umfasst.

17. Kaffeegetränkesystem, einschließlich einer Kaffeebohnenpackungskartusche (30) und einer Kaffeebrühvorrichtung (1) nach einem der vorhergehenden Ansprüche, wobei die Kaffeebohnenpackungskartusche abnehmbar mit der Kaffeebrühvorrichtung (1) verbunden und angeordnet ist, um mehrere Portionen von Kaffeebohnen (4) aufzunehmen und zuzuführen.

18. Kaffeegetränksystem nach Anspruch 17,
wobei die Kaffeebohnenpackungskartusche (30) Folgendes umfasst:
einen Behälter (32), umfassend ein Innenvolumen und mindestens eine Ausgangsöffnung (34), die einen Kaffeebohnenauslass definiert, welches Innenvolumen Kaffeebohnen (4) aufnimmt;
Transportmittel, geeignet um den Transport der Kaffeebohnen (4) von dem Innenvolumen zu der Ausgangsöffnung (34) der Kartusche (30) und zu der Eingangsöffnung (2) zu ermöglichen,
wobei das System ferner mit einer Dosierkammer versehen ist, um Kaffeebohnen, die mithilfe der Transportmittel in die Dosierkammer transportiert werden, aufzunehmen, wobei die Dosierkammer einen Bodenabschnitt umfasst, der einen Teil des Mahlwerks bildet, welcher Bodenabschnitt in der Kaffeebrühvorrichtung angeordnet ist, um sich um eine erste Achse, die in einer vertikalen Richtung verläuft, zu drehen, wobei das System so angeordnet ist, dass bei Aktivierung des Mahlwerks der Bodenabschnitt sich um die vertikale Achse dreht, um die Kaffeebohnen von der Dosierkammer in das Mahlwerk zu transportieren und die Kaffeebohnen zu mahlen.

19. Verfahren zur Herstellung eines Getränks mittels einer Vorrichtung nach einem der Ansprüche 1-16, wobei das Verfahren folgende Schritte umfasst: Transportieren von Kaffeebohnen zu dem Mahlwerk und deren Zermahlen zu gemahlenem Kaffee;
Transportieren des gemahlenen Kaffees zu der Brühkammer über den Auslass für gemahlenen Kaffee auf einem Transportweg für gemahlenen Kaffee;
Bereitstellen eines Luftstroms, mindestens teilweise, während des Mahlens und/oder Transports des gemahlenen Kaffees, wobei der Luftstrom mindestens teilweise den Transportweg für gemahlenen Kaffee zur Außenseite der Kaffeebrühvorrichtung und bevorzugt in Richtung eines Benutzers der Vorrichtung passiert.

## Revendications

1. Appareil d'infusion de café comprenant :
une ouverture d'entrée (2) pour recevoir des grains de café (4),
un moulin (6) pour moudre les grains de café qui sont entrés dans l'appareil d'infusion de café (1), via l'ouverture d'entrée (2),
une trajectoire de transport de café moulu (8) pour transporter le café moulu du moulin (6) à un dispositif d'infusion,
un dispositif d'infusion (40) pour infuser le café sur la base du café moulu distribué, et
un système de ventilation d'air (10),
**caractérisé en ce que** le système de ventilation d'air (10) est en raccordement de fluide avec le moulin (6) pour fournir au moins un flux d'air comprenant au moins un arôme de mouture de café à l'extérieur (3) de l'appareil d'infusion de café (1) et de préférence dans la direction d'un utilisateur de l'appareil (1), et **en ce que** le système de ventilation d'air (10) comprend au moins un ventilateur (12) et au moins un élément de guidage de flux d'air (14), qui fournit au moins partiellement une trajectoire d'écoulement pour le flux d'air, du moulin (6) au ventilateur (12).

2. Appareil selon la revendication 1,
dans lequel le système de ventilation d'air (10) est agencé pour transporter l'air du moulin à l'extérieur de l'appareil.

3. Appareil selon la revendication 1 ou 2,
dans lequel le système de ventilation d'air (10) est agencé pour aspirer l'air provenant du moulin pour transporter l'air à l'extérieur de l'appareil.

4. Appareil selon l'une quelconque des revendications précédentes, dans lequel le flux d'air ou un flux d'air supplémentaire à mélanger ou en ligne avec le flux d'air comprend également un arôme d'infusion et/ou un arôme des grains de café non moulus qui sont entrés ou sont agencés pour entrer dans l'appareil d'infusion de café et/ou un arôme de la boisson préparée et/ou de vapeur se produisant pendant la préparation d'une boisson.

5. Appareil selon l'une quelconque des revendications précédentes, dans lequel le système de ventilation d'air (10) comprend en outre des éléments de guidage de flux d'air supplémentaires (14', 14") qui fournissent au moins partiellement une trajectoire d'écoulement pour le flux d'air du ventilateur à l'extérieur (3) de l'appareil (1) et/ou de la chambre d'infusion (40) et/ou d'un récipient (32) pour stocker des grains de café non moulus et/ou de l'ouverture d'entrée (2) pour recevoir les grains de café non moulus et/ou d'une sortie de boisson pour distribuer la boisson préparée au ventilateur (12).

6. Appareil selon l'une quelconque des revendications précédentes,
dans lequel le ventilateur (12) est prévu sous la forme d'un ventilateur de type à aspiration, pour aspirer l'air à l'extérieur du moulin (6) afin de fournir le au moins un flux d'air comprenant l'arôme de mouture de café.

7. Appareil selon l'une quelconque des revendications précédentes,
dans lequel le ventilateur (12) est positionné au niveau d'une ouverture de sortie de flux d'air d'arôme (16) au niveau d'un boîtier (18) de l'appareil (1).

8. Appareil selon l'une quelconque des revendications précédentes,
dans lequel le moulin (6) comprenant un élément de raccordement de flux d'air (22), le au moins un élément de guidage de flux d'air (14), directement ou indirectement raccordé au ventilateur (12), est raccordé à ce dernier.

9. Appareil selon l'une quelconque des revendications précédentes,
dans lequel le moulin comprend une sortie de café moulu (20), une partie de la trajectoire de transport de café moulu (8) pour transporter le café moulu au dispositif d'infusion et dans lequel l'élément de raccordement de flux d'air (22) est positionné sur ce dernier.

10. Appareil selon la revendication 9,
dans lequel la sortie de café moulu (20) est positionnée au moins partiellement au niveau de la partie latérale du moulin (6).

11. Appareil selon la revendication 9 ou 10,
dans lequel la sortie de café moulu (20) est prévue de sorte que le café moulu entre dans la sortie de café moulu (20) par une trajectoire de transport de préférence horizontale (8') orientée de manière latérale suivie par une trajectoire de transport (8) orientée vers le bas.

12. Appareil selon l'une quelconque des revendications 9 à 11,
dans lequel la sortie de café moulu (20) comprend une goulotte de café moulu (24) et de préférence un entonnoir, pointant vers le bas dans le dispositif d'infusion.

13. Appareil selon l'une quelconque des revendications 8 à 12,
dans lequel l'élément de raccordement de flux d'air (22) est prévu dans une position essentiellement sur un niveau (L_{AS}) égal ou supérieur au niveau (L_{TP}) de la trajectoire de transport de café moulu (8).

14. Appareil selon l'une quelconque des revendications 8 à 13,
dans lequel l'élément de raccordement de flux d'air (22) est prévu au niveau d'un élément de couvercle supérieur (26) de la trajectoire de transport de café moulu (8) et de préférence au niveau d'un couvercle supérieur (26) d'une goulotte de café moulu (24).

15. Appareil selon l'une quelconque des revendications précédentes,
dans lequel au moins un élément de filtre (28) est prévu à l'intérieur du raccordement de fluide entre le moulin (6) et le ventilateur (12) et de préférence au niveau d'un élément de couvercle supérieur (20) de la trajectoire de transport de café moulu (8).

16. Appareil selon l'une quelconque des revendications précédentes,
comprenant au moins un élément de commande pour commander un temps de ventilation du ventilateur (12), de préférence construit de sorte que le temps de ventilation est commandé en fonction du temps de mouture du moulin (6) et de préférence commandé de sorte qu'il comprend un dépassement défini après l'arrêt du moulin (6).

17. Système de boisson de café comprenant une cartouche d'emballage de grains de café (30) et un appareil d'infusion de café (1) selon l'une quelconque des revendications précédentes, dans lequel la cartouche d'emballage de grains de café (30) est raccordée de manière amovible à l'appareil d'infusion de café (1) et étant agencée pour contenir et fournir plusieurs doses de grains de café (4).

18. Système de boisson de café selon la revendication 17,
la cartouche d'emballage de grains de café (30) comprenant :
un récipient (32) comprenant un volume intérieur et au moins une ouverture de sortie (34) définissant une sortie de grains de café, le volume intérieur contenant des grains de café (4) ;
des moyens de transport adaptés pour permettre le transport des grains de café (4) du volume intérieur vers l'ouverture de sortie (34) de la cartouche (30) et vers l'ouverture d'entrée (2),
dans lequel le système est en outre prévu avec une chambre de dosage pour recevoir des grains de café qui sont transportés à l'aide des moyens de transport dans la chambre de dosage, dans lequel la chambre de dosage comprend une partie inférieure qui fait partie du moulin, ladite partie inférieure étant agencée dans l'appareil d'infusion de café pour tourner autour d'un premier axe s'étendant dans une direction verticale dans lequel le système est agencé de sorte que, suite à l'activation du moulin, la partie inférieure tourne autour de l'axe vertical pour transporter les grains de café de la chambre de dosage dans le moulin et pour moudre les grains de café.

19. Procédé pour préparer une boisson au moyen d'un appareil selon l'une quelconque des revendications 1 à 16, dans lequel le procédé comprend les étapes suivantes : transporter les grains de café jusqu'au moulin et les moudre pour en faire du café moulu ;
transporter le café moulu vers la chambre d'infusion via la sortie de café moulu sur une trajectoire de transport de café moulu ;
prévoir un flux d'air au moins partiellement pendant la mouture, et/ou le transport du café moulu, moyennant quoi le flux d'air passe au moins partiellement par la trajectoire de transport de café moulu, jusqu'à l'extérieur de l'appareil d'infusion de café et de préférence dans la direction d'un utilisateur de l'appareil.
